# EUROPEAN PATENT APPLICATION

(11) **EP 4 600 769 A1**
(43) Date of publication of application: **13.08.2025**
(21) Application number: 25155721.1
(22) Date of filing: 04.02.2025
(51) Int. Cl.: G05B 19/4099, B22F 10/38, B22F 10/85, B33Y 50/02, G01N 23/00, G05B 23/02

(54) **METHODS AND SYSTEMS FOR IN-PROCESS MONITORING OF ADDITIVE MANUFACTURING**

(30) Priority: 09.02.2024 US 202418437995
(71) Applicant: The Boeing Company, Arlington, VA 22202 (US)
(72) Inventor: BHATT, Dhara Bhargav, Arlington, 22202 (US); CHOPRA, Seema, Arlington, 22202 (US); HASSAN, Jazib, Arlington, 22202 (US); KODUMURU, Bharath Kumar, Arlington, 22202 (US); YADAV, Surya Pratap Singh, Arlington, 22202 (US)
(74) Representative: Boult Wade Tennant LLP

(57) **Abstract**

Systems and methods for in-process monitoring of additive manufacturing are described. The systems and methods utilize a predictive model trained to identify anomalies within a component which have a likelihood of resulting in a manufacturing defect. The predictive model is trained at least by identifying one or more manufacturing anomalies relating to the additive manufacturing of a test coupon, identifying one or more manufacturing defects within the resulting test coupon, and performing registration between the one or more manufacturing anomalies and the one or more manufacturing defects. The predictive model is used to monitor additive manufacturing processes and optionally inform the updating of process parameters.

## Description

### FIELD

This disclosure relates to systems and methods for additive manufacturing. More specifically, the disclosed examples relate to methods and systems for monitoring additive manufacturing.

### INTRODUCTION

Traditional quality control methods utilized in additive manufacturing comprise post-manufacturing methods, such as destructive testing of test coupons and non-destructive testing of finished products, which may be used to identify anomalies and defects in a finished product but are insufficient for in-process monitoring. Furthermore, testing for defects in a finished product may result in unnecessary wastage as the defects are only identified after the manufacturing process has concluded and thus materials have been used. Accordingly, improvements in the monitoring of additive manufacturing would result in a decrease in defective components and wasted materials.

### SUMMARY

The present disclosure provides systems, apparatuses, and methods relating to in-process monitoring of additive manufacturing.

In some examples, methods and systems for in-process monitoring of additive manufacturing include receiving and/or utilizing data relating to additive manufacturing of a test coupon; based on the received data, identifying one or more manufacturing anomalies in the test coupon; based on non-destructive testing, identifying one or more manufacturing defects within the test coupon; and performing registration between the one or more manufacturing anomalies and the one or more manufacturing defects with a machine learning model to generate a predictive model, the predictive model being configured to identify future manufacturing anomalies that would result in future manufacturing defects.

In some examples, methods and systems for in-process monitoring of an additive manufacturing process includes monitoring an additive manufacturing process with optical tomography; and utilizing a predictive model to analyze optical tomography data, the predictive model configured to identify one or more manufacturing anomalies which would result in one or more manufacturing defects within a resulting component of the additive manufacturing process; wherein the predictive model was trained with the following steps: historical optical tomography data was received relating to additive manufacturing of a test coupon; one or more historical manufacturing anomalies in the test coupon were identified in the historical optical tomography data; one or more manufacturing defects within the test coupon were identified; and registration between the one or more manufacturing anomalies and the one or more manufacturing defects was performed resulting in the predictive model.

Features, functions, and advantages may be achieved independently in various examples of the present disclosure, or may be combined in yet other examples, further details of which can be seen with reference to the following description and drawings.

### BRIEF DESCRIPTION OF THE DRAWINGS

Fig. 1 is a schematic diagram depicting a system for in-process monitoring of an additive manufacturing process.
Fig. 2 is a schematic diagram depicting an additive manufacturing device configured to be monitored by the system of Fig. 1.
Fig. 3 is a flowchart depicting steps of a method for in-process monitoring of an additive manufacturing process.
Fig. 4 is a flowchart depicting steps of a method of registration between optical tomography data and computed tomography data utilized in the method of Fig. 3.
Fig. 5 is a schematic diagram depicting a data processing system.
Fig. 6 is a schematic diagram depicting a network data processing system.

### DETAILED DESCRIPTION

Various examples of methods and systems for in-process monitoring of additive manufacturing are described below and illustrated in the associated drawings. Unless otherwise specified, an in-process additive manufacturing system in accordance with the present teachings, and/or its various components, may contain at least one of the structures, components, functionalities, and/or variations described, illustrated, and/or incorporated herein. Furthermore, unless specifically excluded, the process steps, structures, components, functionalities, and/or variations described, illustrated, and/or incorporated herein in connection with the present teachings may be included in other similar devices and methods, including being interchangeable between disclosed examples. The following description of various examples is merely illustrative in nature and is in no way intended to limit the disclosure, its application, or uses. Additionally, the advantages provided by the examples described below are illustrative in nature and not all examples provide the same advantages or the same degree of advantages.

This Detailed Description includes the following sections, which follow immediately below: (1) Definitions; (2) Overview; (3) Examples, Components, and Alternatives; (4) Advantages, Features, and Benefits; and (5) Conclusion. The Examples, Components, and Alternatives section is further divided into subsections, each of which is labeled accordingly.

### Definitions

The following definitions apply herein, unless otherwise indicated.

"Comprising," "including," and "having" (and conjugations thereof) are used interchangeably to mean including but not necessarily limited to, and are open-ended terms not intended to exclude additional, unrecited elements or method steps.

Terms such as "first", "second", and "third" are used to distinguish or identify various members of a group, or the like, and are not intended to show serial or numerical limitation.

"AKA" means "also known as," and may be used to indicate an alternative or corresponding term for a given element or elements.

"Processing logic" describes any suitable device(s) or hardware configured to process data by performing one or more logical and/or arithmetic operations (e.g., executing coded instructions). For example, processing logic may include one or more processors (e.g., central processing units (CPUs) and/or graphics processing units (GPUs)), microprocessors, clusters of processing cores, FPGAs (field-programmable gate arrays), artificial intelligence (Al) accelerators, digital signal processors (DSPs), and/or any other suitable combination of logic hardware.

A "controller" or "electronic controller" includes processing logic programmed with instructions to carry out a controlling function with respect to a control element. For example, an electronic controller may be configured to receive an input signal, compare the input signal to a selected control value or setpoint value, and determine an output signal to a control element (e.g., a motor or actuator) to provide corrective action based on the comparison. In other examples, an electronic controller may be configured to interface between a host device (e.g., a desktop computer, a mainframe, etc.) and a peripheral device (e.g., a memory device, an input/output device, etc.) to control and/or monitor input and output signals to and from the peripheral device.

### Overview

In general, methods and systems for in-process monitoring additive manufacturing include receiving data related to the additive manufacturing of a test coupon, identifying anomalies (e.g., spattering, etc.) relating to the additive manufacturing process within the test coupon based on this received data, identifying post-manufacturing defects (e.g., fractures) in the test coupon, training a predictive model by performing registration between the anomalies and the resulting defects, and utilizing the predictive model to monitor the production of further components.

In some examples, the additive manufacturing process comprises laser bed powder fusion. Additionally, or alternatively, the additive manufacturing process may comprise direct energy deposition. Accordingly, the received data related to the additive manufacturing of a test coupon may include data related to additive manufacturing methods which utilize a focused energy source such as a laser, a plasma arc, or an electron beam. For example, the received data may comprise melt pool data (e.g., a size of the melt pool, temperature of the melt pool, etc.), a power output and/or beam diameter of the focused energy source, a scan speed, and/or other process parameters utilized in the additive manufacturing process.

In some examples, the received data includes image data such as optical tomography (OT) image data from an optical tomography imaging device. In some examples, the OT image data may be captured by the optical tomography imaging device continuously or at a predetermined sample rate. Additionally, or alternatively, the OT image data may be captured by the optical tomography imaging device at predetermined stages of the additive manufacturing process.

Identifying anomalies in the test coupon includes analyzing the received data (e.g., the image data) to identify one or more anomalies, such as spatter, occurring at any stage of the additive manufacturing process. In some examples, OT image data of the additive manufacturing process may be analyzed by one or more computer vision algorithms to determine the presence of one or more anomalies in the manufactured material. For example, one or more of the computer vision algorithms may comprise an edge detection algorithm and/or an image recognition algorithm configured to detect anomalies within a manufactured layer of the test coupon.

In some examples, identifying anomalies in the received data may include using an image classification model configured to classify portions of the OT image data into different classifications based on the presence of features corresponding to spatter and/or other manufacturing anomalies. For example, identifying anomalies may include classifying areas of the manufactured material as either normal or irregular.

In some examples, identifying anomalies may include segmenting the OT image data into two or more portions, such as segmenting the melt pool from the surrounding material in the OT image data. In this manner, irregularity identification may be performed on one, several, and/or all segmented portions in the OT image data.

In some examples, identifying anomalies in the received data may include analyzing gradients in the OT image data e.g., to identify portions of the OT image data which include irregular gradients and/or areas of high contrast between neighboring pixels, which may indicate anomalies in the material.

In some examples, one or more mechanical fatigue testing processes (AKA stress testing) may be applied to the test coupon after manufacturing. For example, the test coupon may be subjected to one or more compression tests, axial fatigue tests, torsion fatigue tests, etc.

After the manufacturing and/or stress testing of the test coupon, one or more manufacturing defects (e.g., fractures) may be identified. Identifying the one or more manufacturing defects may include utilizing one or more non-destructive testing processes, such as computed tomography (CT). In some examples, the CT may utilize x-ray imaging, resulting in CT image data.

In some examples, identifying manufacturing defects in the test coupon includes analyzing the CT image data to identify one or more defects, such as fractures, occurring within the test coupon. In some examples, the CT image data may be analyzed by one or more computer vision algorithms to determine the presence of one or more fractures in the manufactured material. For example, one or more of the computer vision algorithms may comprise an edge detection algorithm and/or an image recognition algorithm configured to detect fractures within the test coupon.

In some examples, as with the irregularity identification described above, identifying manufacturing defects in the CT image data may include using an image classification model configured to classify portions of the CT image data into different classifications based on the presence of features corresponding to manufacturing defects.

In some examples, identifying manufacturing defects in the CT image data may include analyzing gradients in the CT image data e.g., to identify portions of the CT image data which include irregular gradients and/or areas of high contrast between neighboring pixels, which may indicate fractures in the material.

In general, a predictive model is trained on the identified anomalies and the manufacturing defects to predict whether an anomaly detected during manufacturing would result in a manufacturing defect. Accordingly, the predictive model is configured to produce a defect prediction for a given detected anomaly, i.e., a prediction of whether or not the anomaly would result in a manufacturing defect.

In some examples, the defect prediction may comprise a classification between two or anomaly types (e.g., a benign anomaly type and a defect-causing anomaly type). In some examples, the defect prediction may comprise a percentage likelihood of an anomaly developing into a manufacturing defect. In some examples, the defect prediction may comprise a grading scale of anomaly types, e.g., the predictive model may grade the anomaly on a scale of potential defect severity.

In general, the predictive model is trained by performing registration between the one or more manufacturing anomalies and the one or more manufacturing defects, such that the predictive model is configured to identify manufacturing anomalies that would result in manufacturing defects.

In some examples, performing registration between the anomalies and the defects may include utilizing a classification model configured to classify anomalies into two or more classifications based on the comparison with the resulting defects. For example, the predictive model may classify anomalies as either: a) anomalies which would not result in manufacturing defects or b) anomalies which would result in manufacturing defects.

In some examples, performing registration between anomalies and defects may include utilizing feature extraction on the relevant image data (e.g., the OT image data and the CT image data) related to the detected anomalies and the detected defects, e.g., performing edge detection, pixel density analysis, etc., to determine corresponding features of the anomalies and the defects. The extracted features may then be matched between the anomalies and the defects, e.g., by identifying correspondences between the features in the OT image data and the corresponding features in the CT image data.

After training, the predictive model is configured to receive in-process monitoring data relating to the additive manufacturing of non-test components (e.g., production components) and identify anomalies which might result in defects in the finished product, thereby enabling proactive adjustments to the manufacturing process.

For example, during manufacturing, an optical tomography imaging device is used to monitor the manufacturing process, resulting in in-process OT image data. The in-process OT image data may be processed by one or more computer vision algorithms, as described above with respect to the test coupon, to determine anomalies. The detected anomalies may be analyzed by the predictive model to determine a respective defect prediction for each detected anomaly.

In the case in which a detected anomaly is predicted to result in a defect, the methods and systems described herein may be configured to alter the current manufacturing process by: (i) altering one or more process parameters of the in-process additive manufacturing, (ii) ceasing the in-process additive manufacturing, and/or (iii) designating the component to be scrapped.

In some examples, altering one or more process parameters of the in-process additive manufacturing process may include altering: a laser power output (e.g., adjusting the intensity of the laser in laser bed powder fusion and/or direct energy deposition to ensure proper melting and solidification of the material), melt pool size, melt pool temperature, scan speed, manufactured layer thickness, atmosphere control of a manufacturing chamber, gas flow rate, gas composition, powder bed temperature, etc.

Technical solutions are disclosed herein for in-process monitoring of additive manufacturing. Specifically, the disclosed systems and methods address a technical problem tied to quality control technology arising in the realm of additive manufacturing, namely the technical problem of ensuring components are manufactured without defects or anomalies which would compromise the structural integrity of the manufactured component. The systems and methods disclosed herein provide an improved solution to this technical problem by utilizing a predictive model configured to identify anomalies in the manufacturing process which would result in defects in the finished product.

The disclosed systems and methods provide an integrated practical application of the principles discussed herein. Specifically, the disclosed systems and methods describes a specific manner of monitoring in-process additive manufacturing, which provides a specific improvement over prior systems and results in improved manufactured components. Accordingly, the disclosed systems and methods apply (or use) the relevant principles in a meaningfully limited way.

Examples of the systems and methods for in-process monitoring of additive manufacturing described herein may be embodied as a computer method, computer system, or computer program product. Accordingly, examples of the systems and methods may take the form of an entirely hardware example, an entirely software example (including firmware, resident software, micro-code, and the like), or an example combining software and hardware features, all of which may generally be referred to herein as a "circuit," "module," or "system." Furthermore, features of the systems and methods may take the form of a computer program product embodied in a computer-readable medium (or media) having computer-readable program code/instructions embodied thereon.

Any combination of computer-readable media may be utilized. Computer-readable media can be a computer-readable signal medium and/or a computer-readable storage medium. A computer-readable storage medium may include an electronic, magnetic, optical, electromagnetic, infrared, and/or semiconductor system, apparatus, or device, or any suitable combination of these. More specific examples of a computer-readable storage medium may include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, and/or any suitable combination of these and/or the like. In the context of this disclosure, a computer-readable storage medium may include any suitable non-transitory, tangible medium that can contain or store a program for use by or in connection with an instruction execution system, apparatus, or device.

A computer-readable signal medium may include a propagated data signal with computer-readable program code embodied therein, for example, in baseband or as part of a carrier wave. Such a propagated signal may take any of a variety of forms, including, but not limited to, electromagnetic, optical, and/or any suitable combination thereof. A computer-readable signal medium may include any computer-readable medium that is not a computer-readable storage medium and that is capable of communicating, propagating, or transporting a program for use by or in connection with an instruction execution system, apparatus, or device.

Program code embodied on a computer-readable medium may be transmitted using any appropriate medium, including but not limited to wireless, wireline, optical fiber cable, radio frequency (RF), and/or the like, and/or any suitable combination of these.

Computer program code for carrying out operations for examples of the systems and methods may be written in one or any combination of programming languages, including an object-oriented programming language (such as Java, C++), conventional procedural programming languages (such as C), and functional programming languages (such as Haskell). Mobile apps may be developed using any suitable language, including those previously mentioned, as well as Objective-C, Swift, C#, HTML5, and the like. The program code may execute entirely on a user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), and/or the connection may be made to an external computer (for example, through the Internet using an Internet Service Provider).

Examples of the systems and methods may be described below with reference to flowchart illustrations and/or block diagrams of methods, apparatuses, systems, and/or computer program products. Each block and/or combination of blocks in a flowchart and/or block diagram may be implemented by computer program instructions. The computer program instructions may be programmed into or otherwise provided to processing logic (e.g., a processor of a general purpose computer, special purpose computer, field programmable gate array (FPGA), or other programmable data processing apparatus) to produce a machine, such that the (e.g., machine-readable) instructions, which execute via the processing logic, create means for implementing the functions/acts specified in the flowchart and/or block diagram block(s).

Additionally or alternatively, these computer program instructions may be stored in a computer-readable medium that can direct processing logic and/or any other suitable device to function in a particular manner, such that the instructions stored in the computer-readable medium produce an article of manufacture including instructions which implement the function/act specified in the flowchart and/or block diagram block(s).

The computer program instructions can also be loaded onto processing logic and/or any other suitable device to cause a series of operational steps to be performed on the device to produce a computer-implemented process such that the executed instructions provide processes for implementing the functions/acts specified in the flowchart and/or block diagram block(s).

Any flowchart and/or block diagram in the drawings is intended to illustrate the architecture, functionality, and/or operation of possible examples of the in-process monitoring systems and methods. In this regard, each block may represent a module, segment, or portion of code, which comprises one or more executable instructions for implementing the specified logical function(s). In some examples, the functions noted in the block may occur out of the order noted in the drawings. For example, two blocks shown in succession may, in fact, be executed concurrently or substantially concurrently, or the blocks may sometimes be executed in the reverse order, depending upon the functionality involved. Each block and/or combination of blocks may be implemented by special purpose hardware-based systems (or combinations of special purpose hardware and computer instructions) that perform the specified functions or acts.

### Examples, Components, and Alternatives

The following sections describe selected examples and features of illustrative systems and methods for in-process monitoring of additive manufacturing. The examples in these sections are intended for illustration and should not be interpreted as limiting the scope of the present disclosure. Each section may include one or more distinct examples, and/or contextual or related information, function, and/or structure.

### A. Illustrative System for In-Process Monitoring of Additive Manufacturing

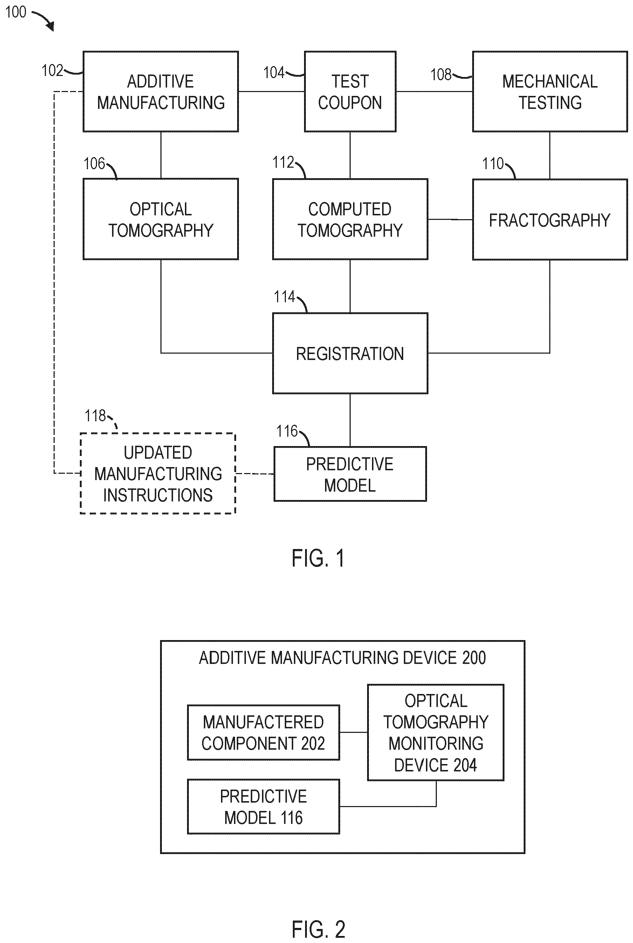

As shown in Figs. 1 and 2, this section describes an illustrative system 100 for in-process monitoring of additive manufacturing. System 100 is an example of the systems described above.

System 100 is an in-process monitoring system for monitoring an additive manufacturing process 102. Additive manufacturing process 102 is an additive manufacturing process which is configured to manufacture structured components from raw materials. In some examples, additive manufacturing process comprises a process which utilizes a focused energy source for melting and/or fusing portions of the raw materials in a predetermined manner, such that the resulting component is produced. For example, additive manufacturing process 102 may comprise a laser bed powder fusion process. Additionally, or alternatively, additive manufacturing process 102 may comprise a direct energy deposition process.

Additive manufacturing process 102 is utilized to manufacture a test coupon 104. In some examples, test coupon 104 is a test component having a form and/or structure specifically selected for mechanical testing of the material properties of test coupon 104. For example, test coupon 104 may have a cylindrical or substantially cylindrical shape, a planar or substantially planar shape, or other suitable shape for testing material properties. Additionally, or alternatively, test coupon 104 may have a form and/or structure substantially similar to a non-test (e.g., production) component. For example, test coupon 104 may have a shape configured to replicate portions of a production component.

During manufacturing, an optical tomography device 106 is utilized to capture optical tomography (OT) image data related to the additive manufacturing of test coupon 104. In some examples, optical tomography device 106 is a single sensor device, such that the OT image data is collected by a single source. In some examples, optical tomography device 106 is a multi-sensor device, such that the OT image data is collected by an array of OT imaging sources. In some examples, the OT image data may be captured by optical tomography device 106 continuously or at a predetermined sample rate. In some examples, the OT image data may be captured by optical tomography device 106 at predetermined stages of additive manufacturing process 102.

The OT image data is analyzed to identify anomalies, such as spatter, in the test coupon occurring during the additive manufacturing process. In some examples, OT image data of the additive manufacturing process may be analyzed by one or more computer vision algorithms, such as edge detection algorithm(s) and/or image recognition algorithm(s), to determine the presence of one or more anomalies in the manufactured material.

The OT image data may be analyzed with an image classification model configured to classify portions of the OT image data into different classifications based on the presence of features corresponding to spatter and/or other manufacturing anomalies. For example, identifying anomalies may include classifying areas of the manufactured material as either normal or irregular.

The OT image data may be segmented into two or more portions, such as segmenting a melt pool of additive manufacturing process 102 from the surrounding material in the OT image data. In this manner, irregularity identification may be performed on one, several, and/or all segmented portions in the OT image data. Additionally, or alternatively, identifying anomalies in test coupon 104 may include analyzing gradients in the OT image data e.g., to identify portions of the OT image data which include irregular gradients and/or areas of high contrast between neighboring pixels, which may indicate anomalies in the test coupon.

After manufacturing, a mechanical testing 108 may be applied to test coupon 104. Mechanical testing 108 is configured to subject test coupon 104 to one or more processes configured to provide mechanical fatigue. Accordingly, mechanical testing 108 may comprise any mechanical testing process suitable for testing mechanical and/or material properties of test coupon 104. For example, mechanical testing 108 may include one or more compression tests, axial fatigue tests, and/or torsion fatigue tests.

In some examples, such as in the example in which test coupon 104 has a form/shape substantially similar to a production component, mechanical testing 108 may include subjecting test coupon 104 to conditions resembling those encountered by the production component. Similarly, in some examples, mechanical testing 108 may include subjecting test coupon 104 to worst-case conditions in which a production component may encounter. For example, mechanical testing 108 may include higher levels of stress, compression, and/or impact than those typically encountered by the production component.

After mechanical testing 108, fractography 110 is performed on test coupon 104. Fractography 110 includes identifying one or more manufacturing defects such as fractures/discontinuities within test coupon 104. Identifying the one or more manufacturing defects may include utilizing one or more non-destructive testing processes, such as computed tomography (CT) 112. In some examples, CT 112 may utilize x-ray imaging, resulting in CT image data.

Accordingly, fractography 110 may include analyzing the CT image data from CT 112 to identify and/or analyze defects occurring within the test coupon. In some examples, the fractography 110 includes utilizing one or more computer vision algorithms (e.g., edge detection algorithm(s) and/or image recognition algorithm(s)) to determine the presence of one or more defects in test coupon 104.

In some examples, fractography 110 may include using an image classification model configured to classify portions of the CT image data into different classifications based on the presence of features corresponding to fractures. For example, image classification may be used to classify portions of the CT image data into: a) portions of material without defects and b) portions of material with defects.

In some examples, fractography 110 may include analyzing gradients in the CT image data e.g., to identify portions of the CT image data which include irregular gradients and/or areas of high contrast between neighboring pixels, which may indicate fracture defects in the material.

A registration process 114 is performed on the anomalies identified in the OT image data and the defects identified in the CT image data, resulting in a predictive model 116 configured to identify manufacturing anomalies that would result in manufacturing defects.

Registration 114 may include utilizing a classification model configured to classify anomalies into two or more classifications based on the comparison with the resulting defects. For example, the predictive model may classify anomalies as either: a) anomalies which would not result in manufacturing defects or b) anomalies which would result in manufacturing defects.

Registration 114 may include utilizing feature extraction on the relevant image data (e.g., the OT image data and the CT image data) related to the detected anomalies and the detected defects, e.g., performing edge detection, pixel density analysis, etc., to determine corresponding features of the anomalies and the defects. The extracted features may then be matched between the anomalies and the defects, e.g., by identifying correspondences between the features in the OT image data and the corresponding features in the CT image data.

After registration 114, predictive model 116 is configured to predict whether an anomaly detected during manufacturing would result in a manufacturing defect. In other words, predictive model 116 is configured to produce a defect prediction for a given detected anomaly, i.e., a prediction of whether or not the anomaly would result in a manufacturing defect. Accordingly, the predictive model is able to receive in-process monitoring data relating to the additive manufacturing of non-test components (e.g., production components) and identify anomalies which might result in defects in the finished product, thereby enabling proactive adjustments to the manufacturing process.

In some examples, the defect prediction may comprise a classification between two or anomaly types (e.g., a benign anomaly type and a defect-causing anomaly type). In some examples, the defect prediction may comprise a percentage likelihood of an anomaly developing into a manufacturing defect. In some examples, the defect prediction may comprise a grading scale of anomaly types, e.g., the predictive model may grade the anomaly on a scale of potential defect severity.

In the case in which a detected anomaly is predicted to result in a defect, system 100 may optionally generate updated manufacturing instructions 118 and provide them to additive manufacturing process 102 to alter the manufacturing process. Updated manufacturing instructions 118 may include at least one of the following: (i) altering one or more process parameters of the in-process additive manufacturing, (ii) ceasing the in-process additive manufacturing, and/or (iii) designating the component to be scrapped.

In some examples, altering one or more process parameters of the in-process additive manufacturing process may include altering: a laser power output (e.g., adjusting the intensity of the laser in laser bed powder fusion and/or direct energy deposition to ensure proper melting and solidification of the material), melt pool size, melt pool temperature, scan speed, manufactured layer thickness, atmosphere control of a manufacturing chamber, gas flow rate, gas composition, powder bed temperature, etc.

Turning to Fig. 2, an example additive manufacturing device 200 for use with predictive model 116 and configured to execute the additive manufacturing of non-test components, such as manufactured component 202, is shown. In some examples, additive manufacturing device 200 is the same additive manufacturing device as the one executing additive manufacturing process 102. Alternatively, additive manufacturing device is a different additive manufacturing device configured to utilize the same, or substantially similar, additive manufacturing process 102.

Additive manufacturing device 200 includes optical tomography (OT) imaging device 204. In some examples, OT imaging device 204 is OT imagine device 106. Alternatively, OT imaging device 204 may be a different OT imagining device from device 106, but configured to utilize the same, or substantially similar, OT process.

Optical tomography imaging device 204 is used to monitor the manufacturing of manufactured component 202, resulting in in-process OT image data. The in-process OT image data relating to manufactured component 202 may be processed by one or more computer vision algorithms, substantially similar to the above description with respect to test coupon 104, to determine in-process anomalies. The detected anomalies are analyzed by predictive model 116 to determine a respective defect prediction for each detected anomaly.

Accordingly, in the case in which a detected anomaly is predicted to result in a defect, system 100 may optionally generate updated manufacturing instructions 118 and provide them to additive manufacturing device 200 to alter the manufacturing process. Updated manufacturing instructions 118 may include at least one of the following: (i) altering one or more process parameters of the in-process additive manufacturing, (ii) ceasing the in-process additive manufacturing, and/or (iii) designating the component to be scrapped.

Altering one or more process parameters of the in-process additive manufacturing process may include altering: a laser power output (e.g., adjusting the intensity of the laser in laser bed powder fusion and/or direct energy deposition to ensure proper melting and solidification of the material), melt pool size, melt pool temperature, scan speed, manufactured layer thickness, atmosphere control of a manufacturing chamber, gas flow rate, gas composition, powder bed temperature, etc., of additive manufacturing device 200.

### B. Illustrative Method of In-Process Monitoring of Additive Manufacturing

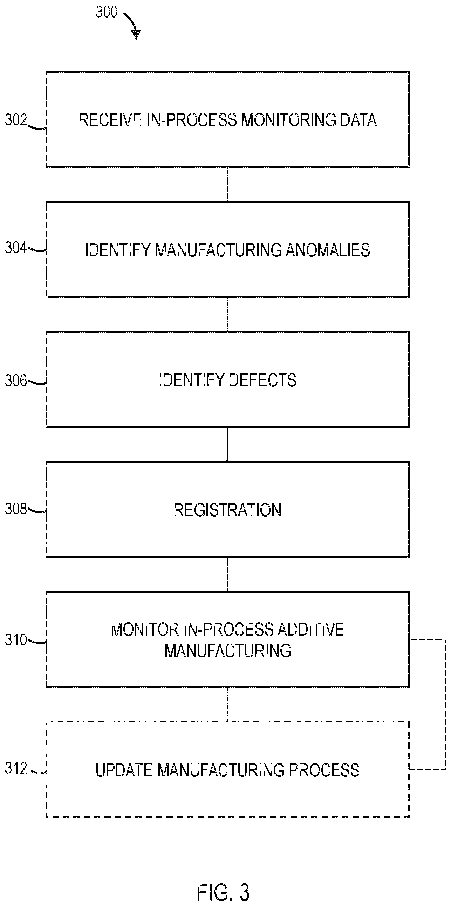

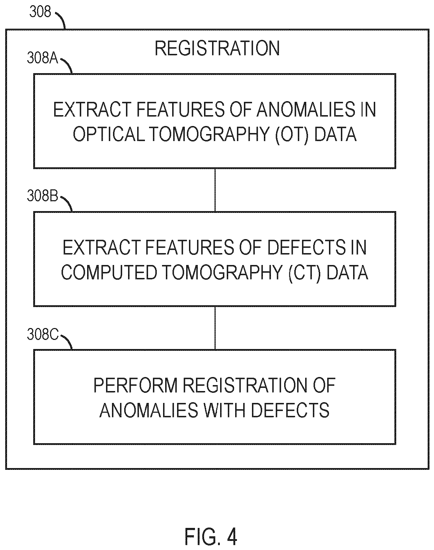

This section describes steps of an illustrative method 300 for in-process monitoring of additive manufacturing; see Figs. 3 and 4. Examples and features of the systems and methods described above may be utilized in the method steps described below. Where appropriate, reference may be made to components and systems that may be used in carrying out each step. These references are for illustration, and are not intended to limit the possible ways of carrying out any particular step of the method.

Fig. 3 is a flowchart illustrating steps performed in an illustrative method, and may not recite the complete process or all steps of the method. Although various steps of method 300 are described below and depicted in Fig. 3, the steps need not necessarily all be performed, and in some cases may be performed simultaneously or in a different order than the order shown.

Step 302 of method 300 includes receiving data relating to the additive manufacturing of a test coupon, the received data including optical tomography (OT) image data from an optical tomography imaging device. The OT image data may comprise continuously captured image data and/or image data captured at a predetermined sample rate.

In some examples, the received data includes data related to process parameters of the additive manufacturing method, such as melt pool data (e.g., a size of the melt pool, temperature of the melt pool, etc.), a power output and/or beam diameter of the focused energy source, a scan speed, and/or other process parameters utilized in the additive manufacturing process.

Step 304 of method 300 includes identifying one or more manufacturing anomalies in the test coupon. Identifying one or more manufacturing anomalies in the test coupon includes analyzing the OT image data of the additive manufacturing process by one or more computer vision algorithms, such as edge detection algorithm(s) and/or image recognition algorithm(s), to determine the presence of one or more anomalies in the manufactured material.

In some examples, the OT image data is analyzed with an image classification model configured to classify portions of the OT image data into different classifications based on the presence of features corresponding to spatter and/or other manufacturing anomalies. For example, identifying anomalies may include classifying areas of the manufactured material as either normal or irregular.

In some examples, the OT image data may be segmented into two or more portions, such as segmenting a melt pool of the additive manufacturing process from the surrounding material in the OT image data. In this manner, irregularity identification may be performed on one, several, and/or all segmented portions in the OT image data. Additionally, or alternatively, identifying one or more anomalies may include analyzing pixel gradients in the OT image data e.g., to identify portions of the OT image data which include irregular gradients and/or areas of high contrast between neighboring pixels, which may indicate anomalies in the test coupon.

Step 306 of method 300 includes identifying one or more manufacturing defects within the test coupon. Identifying one or more manufacturing defects includes utilizing one or more non-destructive testing processes, such as computed tomography (CT). Accordingly, step 306 includes analyzing CT image data with one or more computer vision algorithms (e.g., edge detection algorithm(s) and/or image recognition algorithm(s)) to identify defects occurring within the test coupon.

In some examples, step 306 includes utilizing an image classification model configured to classify portions of the CT image data into different classifications based on the presence of features corresponding to fractures. For example, image classification may be used to classify portions of the CT image data into: a) portions of material without defects and b) portions of material with defects.

In some examples, step 306 may include analyzing gradients in the CT image data e.g., to identify portions of the CT image data which include irregular gradients and/or areas of high contrast between neighboring pixels, which may indicate fracture defects in the material.

Step 308 of method 300 includes performing registration between the one or more manufacturing anomalies and the one or more manufacturing defects with a machine learning model to generate a predictive model, the predictive model being configured to identify future manufacturing anomalies that would result in future manufacturing defects. A further description of step 308 is provided below with reference to Fig. 4.

Step 310 of method 300 includes monitoring in-process additive manufacturing of a non-test component with optical tomography to acquire optical tomography data; and analyzing the optical tomography data with the predictive model. The optical tomography data is processed by one or more computer vision algorithms, as described in step 304 with respect to test coupon, to determine in-process manufacturing anomalies. The detected anomalies are then analyzed by the predictive model to determine a respective defect prediction for each detected anomaly, the defect prediction corresponding to the likelihood in which the anomaly will result in a defect.

Optional step 312 of method 300 includes updating the manufacturing process based on the defect prediction. In some examples, this includes selecting one of the following update procedures: (i) altering one or more process parameters of the in-process additive manufacturing, (ii) ceasing the in-process additive manufacturing, and/or (iii) designating the component to be scrapped.

With reference to Fig. 4, the registration step 308 of method 300 includes one or more sub-steps. Although various sub-steps of step 308 are described below and depicted in Fig. 4, the sub-steps need not necessarily all be performed, and in some cases may be performed simultaneously or in a different order than the order shown.

Sub-step 308A of step 308 includes extracting features of the anomalies identified in step 304. In some examples, this includes utilizing one or more computer vision algorithms, machine learning models, and/or statistical pattern recognition algorithms to analyze the optical tomography data. For example, edge detection, pixel density analysis, etc., may be used in conjunction with models such as Bayesian classification, artificial neural network models, k-nearest neighbor models, and/or other classification / feature extraction models to extract features of the anomalies.

Sub-step 308B of step 308 includes extracting features of the defects identified in step 306. In some examples, this includes utilizing one or more computer vision algorithms, machine learning models, and/or statistical pattern recognition algorithms to analyze the computer tomography data. For example, edge detection, pixel density analysis, etc., may be used in conjunction with models such as Bayesian classification, artificial neural network models, k-nearest neighbor models, and/or other classification / feature extraction models to extract features of the defects.

Sub-step 308C of step 308 includes performing registration between the anomalies and the defects based, at least in part, on the respective extracted features. In some examples, the extracted features may be compared and/or matched between the anomalies and the defects, e.g., by identifying correspondences between the features in the OT image data and the corresponding features in the CT image data. For example, the matched features may include shape, size, location, orientation, depth, and/or other features related to the geometry and/or composition of the anomalies and/or defects.

In some examples, sub-step 308C includes utilizing a classification model configured to classify anomalies into two or more classifications based on the comparison with the resulting defects. For example, anomalies may be classified as either: a) anomalies which resulted in manufacturing defects or b) anomalies which did not result in manufacturing defects.

### C. Illustrative Data Processing System

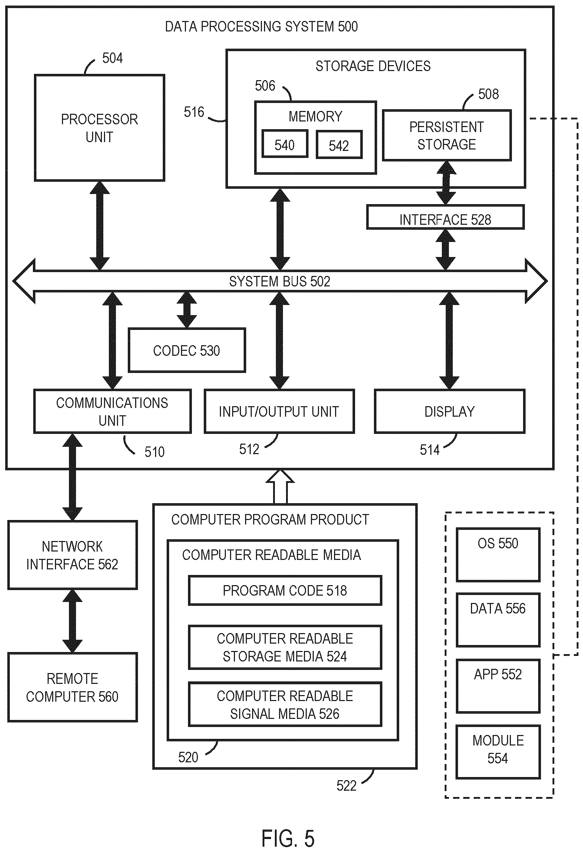

As shown in Fig. 5, this example describes a data processing system 500 (also referred to as a computer, computing system, and/or computer system) in accordance with examples of the present disclosure. In this and certain other examples, data processing system 500 is an illustrative data processing system suitable for implementing features of the systems and methods for in-process monitoring of additive manufacturing. More specifically, in some examples, devices that are examples of data processing systems (e.g., smartphones, tablets, personal computers) may be utilized in training the predictive model(s), operating the predictive model(s), analyzing optical tomography data, analyzing computed tomography data, and/or analyzing or utilizing data relating to an additive manufacturing process.

In this and certain other examples, data processing system 500 includes a system bus 502 (also referred to as communications framework). System bus 502 may provide communications between a processor unit 504 (also referred to as a processor or processors), a memory 506, a persistent storage 508, a communications unit 510, an input/output (I/O) unit 512, a codec 530, and/or a display 514. Memory 506, persistent storage 508, communications unit 510, input/output (I/O) unit 512, display 514, and codec 530 are examples of resources that may be accessible by processor unit 504 via system bus 502.

Processor unit 504 serves to run instructions that may be loaded into memory 506. Processor unit 504 may comprise a number of processors, a multi-processor core, and/or a particular type of processor or processors (e.g., a central processing unit (CPU), graphics processing unit (GPU), etc.), depending on the particular implementation. Further, processor unit 504 may be implemented using a number of heterogeneous processor systems in which a main processor is present with secondary processors on a single chip. In other illustrative examples, processor unit 504 may be a symmetric multi-processor system containing multiple processors of the same type.

Memory 506 and persistent storage 508 are examples of storage devices 516. A storage device may include any suitable hardware capable of storing information (e.g., digital information), such as data, program code in functional form, and/or other suitable information, either on a temporary basis or a permanent basis.

Storage devices 516 also may be referred to as computer-readable storage devices or computer-readable media. Memory 506 may include a volatile storage memory 540 and a non-volatile memory 542. In some examples, a basic input/output system (BIOS), containing the basic routines to transfer information between elements within the data processing system 500, such as during start-up, may be stored in non-volatile memory 542. Persistent storage 508 may take various forms, depending on the particular implementation.

Persistent storage 508 may contain one or more components or devices. For example, persistent storage 508 may include one or more devices such as a magnetic disk drive (also referred to as a hard disk drive or HDD), solid state disk (SSD), floppy disk drive, tape drive, Jaz drive, Zip drive, flash memory card, memory stick, and/or the like, or any combination of these. One or more of these devices may be removable and/or portable, e.g., a removable hard drive. Persistent storage 508 may include one or more storage media separately or in combination with other storage media, including an optical disk drive such as a compact disk ROM device (CD-ROM), CD recordable drive (CD-R Drive), CD rewritable drive (CD-RW Drive), and/or a digital versatile disk ROM drive (DVD-ROM). To facilitate connection of the persistent storage devices 508 to system bus 502, a removable or non-removable interface is typically used, such as interface 528.

Input/output (I/O) unit 512 allows for input and output of data with other devices that may be connected to data processing system 500 (i.e., input devices and output devices). For example, an input device may include one or more pointing and/or information-input devices such as a keyboard, a mouse, a trackball, stylus, touch pad or touch screen, microphone, joystick, game pad, satellite dish, scanner, TV tuner card, digital camera, digital video camera, web camera, and/or the like. These and other input devices may connect to processor unit 504 through system bus 502 via interface port(s). Suitable interface port(s) may include, for example, a serial port, a parallel port, a game port, and/or a universal serial bus (USB).

One or more output devices may use some of the same types of ports, and in some cases the same actual ports, as the input device(s). For example, a USB port may be used to provide input to data processing system 500 and to output information from data processing system 500 to an output device. One or more output adapters may be provided for certain output devices (e.g., monitors, speakers, and printers, among others) which require special adapters. Suitable output adapters may include circuit cards (e.g., video and sound cards) that provide a means of connection between the output device and system bus 502. Other devices and/or systems of devices may provide both input and output capabilities, such as remote computer(s) 560. Display 514 may include any suitable human-machine interface or other mechanism configured to display information to a user, e.g., a cathode ray tube (CRT), light emitting diode (LED), or liquid crystal display (LCD) monitor or screen, etc.

Communications unit 510 refers to any suitable hardware and/or software employed to provide for communications with other data processing systems or devices. While communication unit 510 is shown inside data processing system 500, it may in some examples be at least partially external to data processing system 500. Communications unit 510 may include internal and external technologies, e.g., modems (including regular telephone grade modems, cable modems, and DSL modems), ISDN adapters, and/or wired and wireless Ethernet cards, hubs, routers, etc. Data processing system 500 may operate in a networked environment, using logical connections to one or more remote computers 560. A remote computer(s) 560 may include a personal computer (PC), a server, a router, a network PC, a workstation, a microprocessor-based appliance, a peer device, a smart phone, a tablet, another network note, and/or the like. Remote computer(s) 560 typically include many of the elements described relative to data processing system 500. Remote computer(s) 560 may be logically connected to data processing system 500 through a network interface 562 which is connected to data processing system 500 via communications unit 510. Network interface 562 encompasses wired and/or wireless communication networks, such as local-area networks (LAN), wide-area networks (WAN), and cellular networks. LAN technologies may include Fiber Distributed Data Interface (FDDI), Copper Distributed Data Interface (CDDI), Ethernet, Token Ring, and/or the like. WAN technologies include point-to-point links, circuit switching networks (e.g., Integrated Services Digital networks (ISDN) and variations thereon), packet switching networks, and Digital Subscriber Lines (DSL).

Codec 530 may include an encoder, a decoder, or both, comprising hardware, software, or a combination of hardware and software. Codec 530 may include any suitable device and/or software configured to encode, compress, and/or encrypt a data stream or signal for transmission and storage, and to decode the data stream or signal by decoding, decompressing, and/or decrypting the data stream or signal (e.g., for playback or editing of a video). Although codec 530 is depicted as a separate component, codec 530 may be contained or implemented in memory, e.g., non-volatile memory 542.

Non-volatile memory 542 may include read only memory (ROM), programmable ROM (PROM), electrically programmable ROM (EPROM), electrically erasable programmable ROM (EEPROM), flash memory, and/or the like, or any combination of these. Volatile memory 540 may include random access memory (RAM), which may act as external cache memory. RAM may comprise static RAM (SRAM), dynamic RAM (DRAM), synchronous DRAM (SDRAM), double data rate SDRAM (DDR SDRAM), enhanced SDRAM (ESDRAM), and/or the like, or any combination of these.

Instructions for the operating system, applications, and/or programs may be located in storage devices 516, which are in communication with processor unit 504 through system bus 502. In these illustrative examples, the instructions are in a functional form in persistent storage 508. These instructions may be loaded into memory 506 for execution by processor unit 504. Processes of one or more examples of the present disclosure may be performed by processor unit 504 using computer-implemented instructions, which may be located in a memory, such as memory 506.

These instructions are referred to as program instructions, program code, computer usable program code, or computer-readable program code executed by a processor in processor unit 504. The program code in the different examples may be embodied on different physical or computer-readable storage media, such as memory 506 or persistent storage 508. Program code 518 may be located in a functional form on computer-readable media 520 that is selectively removable and may be loaded onto or transferred to data processing system 500 for execution by processor unit 504. Program code 518 and computer-readable media 520 form computer program product 522 in these examples. In some examples, computer-readable media 520 may comprise computer-readable storage media 524 or computer-readable signal media 526.

Computer-readable storage media 524 may include, for example, an optical or magnetic disk that is inserted or placed into a drive or other device that is part of persistent storage 508 for transfer onto a storage device, such as a hard drive, that is part of persistent storage 508. Computer-readable storage media 524 also may take the form of a persistent storage, such as a hard drive, a thumb drive, or a flash memory, that is connected to data processing system 500. In some instances, computer-readable storage media 524 may not be removable from data processing system 500.

In these examples, computer-readable storage media 524 is a non-transitory, physical or tangible storage device used to store program code 518 rather than a medium that propagates or transmits program code 518. Computer-readable storage media 524 is also referred to as a computer-readable tangible storage device or a computer-readable physical storage device. In other words, computer-readable storage media 524 is media that can be touched by a person.

Alternatively, program code 518 may be transferred to data processing system 500, e.g., remotely over a network, using computer-readable signal media 526. Computer-readable signal media 526 may be, for example, a propagated data signal containing program code 518. For example, computer-readable signal media 526 may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some illustrative examples, program code 518 may be downloaded over a network to persistent storage 508 from another device or data processing system through computer-readable signal media 526 for use within data processing system 500. For instance, program code stored in a computer-readable storage medium in a server data processing system may be downloaded over a network from the server to data processing system 500. The computer providing program code 518 may be a server computer, a client computer, or some other device capable of storing and transmitting program code 518.

In some examples, program code 518 may comprise an operating system (OS) 550. Operating system 550, which may be stored on persistent storage 508, controls and allocates resources of data processing system 500. One or more applications 552 take advantage of the operating system's management of resources via program modules 554, and program data 556 stored on storage devices 516. OS 550 may include any suitable software system configured to manage and expose hardware resources of computer 500 for sharing and use by applications 552. In some examples, OS 550 provides application programming interfaces (APIs) that facilitate connection of different type of hardware and/or provide applications 552 access to hardware and OS services. In some examples, certain applications 552 may provide further services for use by other applications 552, e.g., as is the case with so-called "middleware." Examples and features of present disclosure may be implemented with respect to various operating systems or combinations of operating systems.

The different components illustrated for data processing system 500 are not meant to provide architectural limitations to the manner in which different examples may be implemented. One or more examples of the present disclosure may be implemented in a data processing system that includes fewer components or includes components in addition to and/or in place of those illustrated for computer 500. Other components shown in Fig. 5 can be varied from the examples depicted. Different examples may be implemented using any hardware device or system capable of running program code. For example, data processing system 500 may include organic components integrated with inorganic components and/or may be comprised entirely of organic components (excluding a human being). For example, a storage device may be comprised of an organic semiconductor.

In some examples, processor unit 504 may take the form of a hardware unit having hardware circuits that are specifically manufactured or configured for a particular use, or to produce a particular outcome or progress. This type of hardware may perform operations without needing program code 518 to be loaded into a memory from a storage device to be configured to perform the operations. For example, processor unit 504 may be a circuit system, an application specific integrated circuit (ASIC), a programmable logic device, or some other suitable type of hardware configured (e.g., preconfigured or reconfigured) to perform a number of operations. With a programmable logic device, for example, the device is configured to perform the number of operations and may be reconfigured at a later time. Examples of programmable logic devices include, a programmable logic array, a field programmable logic array, a field programmable gate array (FPGA), and other suitable hardware devices. With this type of implementation, executable instructions (e.g., program code 518) may be implemented as hardware, e.g., by specifying an FPGA configuration using a hardware description language (HDL) and then using a resulting binary file to (re)configure the FPGA.

In other examples, data processing system 500 may be implemented as an FPGA-based (or in some cases ASIC-based), dedicated-purpose set of state machines (e.g., Finite State Machines (FSM)), which may allow critical tasks to be isolated and run on custom hardware. Whereas a processor such as a CPU can be described as a shared-use, general purpose state machine that executes instructions provided to it, FPGA-based state machine(s) are constructed for a special purpose, and may execute hardware-coded logic without sharing resources. Such systems are often utilized for safety-related and mission-critical tasks.

In still another illustrative example, processor unit 504 may be implemented using a combination of processors found in computers and hardware units. Processor unit 504 may have a number of hardware units and a number of processors that are configured to run program code 518. With this and certain other examples, some of the processes may be implemented in the number of hardware units, while other processes may be implemented in the number of processors.

In other examples, system bus 502 may comprise one or more buses, such as a system bus or an input/output bus. Of course, the bus system may be implemented using any suitable type of architecture that provides for a transfer of data between different components or devices attached to the bus system. System bus 502 may include several types of bus structure(s) including memory bus or memory controller, a peripheral bus or external bus, and/or a local bus using any variety of available bus architectures (e.g., Industrial Standard Architecture (ISA), MicroChannel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI)).

Additionally, communications unit 510 may include a number of devices that transmit data, receive data, or both transmit and receive data. Communications unit 510 may be, for example, a modem or a network adapter, two network adapters, or some combination thereof. Further, a memory may be, for example, memory 506, or a cache, such as that found in an interface and memory controller hub that may be present in system bus 502.

### D. Illustrative Distributed Data Processing System

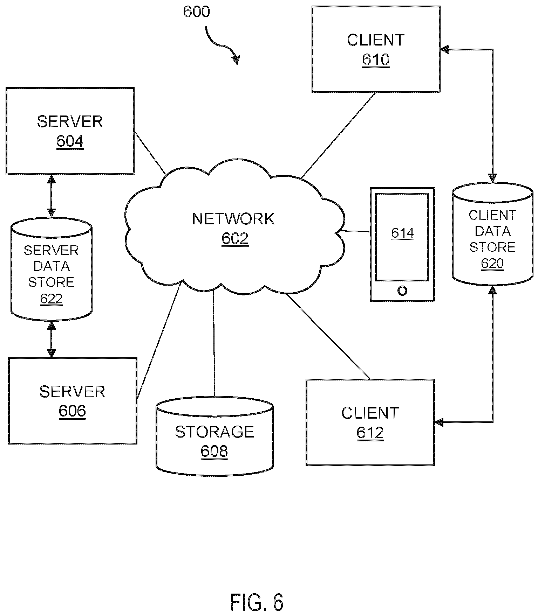

As shown in Fig. 6, this example describes a general network data processing system 600, interchangeably termed a computer network, a network system, a distributed data processing system, or a distributed network, features of which may be included in one or more illustrative examples of the systems and methods for in-process monitoring of additive manufacturing described herein. For example, communication between modules utilized in the above-described systems and/or devices configured to execute steps of the computer implemented method(s) may be facilitated through the use of network data processing system 600.

It should be appreciated that Fig. 6 is provided as an illustration of one example and is not intended to imply any limitation with regard to environments in which different examples may be implemented. Many modifications to the depicted environment may be made.

Network system 600 is a network of devices (e.g., computers), each of which may be an example of data processing system 500, and other components. Network data processing system 600 may include network 602, which is a medium configured to provide communications links between various devices and computers connected within network data processing system 600. Network 602 may include connections such as wired or wireless communication links, fiber optic cables, and/or any other suitable medium for transmitting and/or communicating data between network devices, or any combination thereof.

In this and certain other examples, a first network device 604 and a second network device 606 connect to network 602, as do one or more computer-readable memories or storage devices 608. Network devices 604 and 606 are each examples of data processing system 500, described above. In this and certain other examples, devices 604 and 606 are shown as server computers, which are in communication with one or more server data store(s) 622 that may be employed to store information local to server computers 604 and 606, among others. However, network devices may include, without limitation, one or more personal computers, mobile computing devices such as personal digital assistants (PDAs), tablets, and smartphones, handheld gaming devices, wearable devices, tablet computers, routers, switches, voice gates, servers, electronic storage devices, imaging devices, media players, and/or other networked-enabled tools that may perform a mechanical or other function. These network devices may be interconnected through wired, wireless, optical, and other appropriate communication links.

In addition, client electronic devices 610 and 612 and/or a client smart device 614, may connect to network 602. Each of these devices is an example of data processing system 500, described above regarding Fig. 5. Client electronic devices 610, 612, and 614 may include, for example, one or more personal computers, network computers, and/or mobile computing devices such as personal digital assistants (PDAs), smart phones, handheld gaming devices, wearable devices, and/or tablet computers, and the like. In this and certain other examples, server 604 provides information, such as boot files, operating system images, and applications to one or more of client electronic devices 610, 612, and 614. Client electronic devices 610, 612, and 614 may be referred to as "clients" in the context of their relationship to a server such as server computer 604. Client devices may be in communication with one or more client data store(s) 620, which may be employed to store information local to the clients (e.g., cookie(s) and/or associated contextual information). Network data processing system 600 may include more or fewer servers and/or clients (or no servers or clients), as well as other devices not shown.

In some examples, first client electric device 610 may transfer an encoded file to server 604. Server 604 can store the file, decode the file, and/or transmit the file to second client electric device 612. In some examples, first client electric device 610 may transfer an uncompressed file to server 604 and server 604 may compress the file. In some examples, server 604 may encode text, audio, and/or video information, and transmit the information via network 602 to one or more clients.

Client smart device 614 may include any suitable portable electronic device capable of wireless communications and execution of software, such as a smartphone or a tablet. Generally speaking, the term "smartphone" may describe any suitable portable electronic device configured to perform functions of a computer, typically having a touchscreen interface, Internet access, and an operating system capable of running downloaded applications. In addition to making phone calls (e.g., over a cellular network), smartphones may be capable of sending and receiving emails, texts, and multimedia messages, accessing the Internet, and/or functioning as a web browser. Smart devices (e.g., smartphones) may include features of other known electronic devices, such as a media player, personal digital assistant, digital camera, video camera, and/or global positioning system. Smart devices (e.g., smartphones) may be capable of connecting with other smart devices, computers, or electronic devices wirelessly, such as through near field communications (NFC), BLUETOOTH^{®}, Wi-Fi, or mobile broadband networks. Wireless connectively may be established among smart devices, smartphones, computers, and/or other devices to form a mobile network where information can be exchanged.

Data and program code located in system 600 may be stored in or on a computer-readable storage medium, such as network-connected storage device 608 and/or a persistent storage 508 of one of the network computers, as described above, and may be downloaded to a data processing system or other device for use. For example, program code may be stored on a computer-readable storage medium on server computer 604 and downloaded to client 610 over network 602, for use on client 610. In some examples, client data store 620 and server data store 622 reside on one or more storage devices 608 and/or 508.

Network data processing system 600 may be implemented as one or more of different types of networks. For example, system 600 may include an intranet, a local area network (LAN), a wide area network (WAN), or a personal area network (PAN). In some examples, network data processing system 600 includes the Internet, with network 602 representing a worldwide collection of networks and gateways that use the transmission control protocol/Internet protocol (TCP/IP) suite of protocols to communicate with one another. At the heart of the Internet is a backbone of high-speed data communication lines between major nodes or host computers. Thousands of commercial, governmental, educational, and other computer systems may be utilized to route data and messages. In some examples, network 602 may be referred to as a "cloud." In those examples, each server 604 may be referred to as a cloud computing node, and client electronic devices may be referred to as cloud consumers, or the like. Fig. 6 is intended as an example, and not as an architectural limitation for any illustrative examples.

### E. Illustrative Combinations and Additional Examples

This section describes additional examples and features of systems and methods for in-process monitoring of additive manufacturing, presented without limitation as a series of paragraphs, some or all of which may be alphanumerically designated for clarity and efficiency. Each of these paragraphs can be combined with one or more other paragraphs, and/or with disclosure from elsewhere in this application, in any suitable manner. Some of the paragraphs below expressly refer to and further limit other paragraphs, providing without limitation examples of some of the suitable combinations.

A0. A computer implemented method comprising: receiving data relating to additive manufacturing of a test coupon; based on the received data, identifying one or more manufacturing anomalies in the test coupon; based on non-destructive testing, identifying one or more manufacturing defects within the test coupon; and performing registration between the one or more manufacturing anomalies and the one or more manufacturing defects with a machine learning model to generate a predictive model, the predictive model being configured to identify future manufacturing anomalies that would result in future manufacturing defects.

A1. The computer implemented method of paragraph A0, wherein the additive manufacturing process comprises laser bed powder fusion.

A1.1 The computer implemented method of paragraph A0 or A1, wherein the additive manufacturing process comprises direct energy deposition.

A2. The computer implemented method of paragraph A1 or A1.1, wherein the data relating to the additive manufacturing of the test coupon includes melt pool data.

A3. The computer implemented method of paragraph A2, wherein the melt pool data includes a size of the melt pool.

A4. The computer implemented method of paragraph A2 and/or A3, wherein the data relating to the additive manufacturing of the test coupon further includes a power output of a laser utilized in the laser bed powder fusion.

A5. The computer implemented method of any of paragraphs A2-A4, wherein the one or more manufacturing anomalies comprise spatter anomalies.

A6. The computer implemented method of any of paragraphs A0-A5, wherein the non-destructive testing comprises computed tomography (CT).

A6.1 The computer implemented method of paragraph A6, wherein the CT utilizes x-ray image data.

A7. The computer implemented method of any of paragraphs A0-A6.1, wherein the machine learning model comprises a classification model.

A8. The computer implemented method of any of paragraphs A0-A7, wherein the received data includes image data; and
wherein identifying one or more manufacturing defects in the test coupon includes utilizing a computer vision algorithm to identify the one or more defects in the image data.

A9. The computer implemented method of paragraph A8, wherein the computer vision algorithm comprises an edge detection algorithm.

A10. The computer implemented method of any of paragraphs A0-A9, wherein the received data includes optical tomography data.

A11. The computer implemented method of any of paragraphs A0-A10, wherein the identifying the one or more of the manufacturing defects includes identifying one or more fractures resulting from stress testing of the test coupon.

A12. The computer implemented method of any of paragraphs A0-A11, further comprising: monitoring in-process additive manufacturing of a component with optical tomography to acquire optical tomography data; and analyzing the optical tomography data with the predictive model.

A12.1. The computer implemented method of paragraph A12, further comprising:
based on the analyzing, (i) altering one or more process parameters of the in-process additive manufacturing, (ii) ceasing the in-process additive manufacturing, and/or (iii) designating the component to be scrapped.

A13. A computer program comprising computer program instructions that, when executed by one or more computer processors, cause the one or more computer processors to perform the method of any of paragraphs A0 to A12.1.

A14. A computer readable medium having stored therein a computer program in accordance with paragraph A13.

A15. A data processing system (500) for in-process monitoring of an additive manufacturing process (102) comprising: one or more computer processors (504); a computer memory (506); and the computer program of paragraph A13 stored in the memory (506).

A16. An additive manufacturing device (200) comprising the data processing system (500) of paragraph A15.

B0. A data processing system for in-process monitoring of an additive manufacturing process comprising: one or more processors; a memory; and a plurality of instructions stored in the memory and executable by the one or more processors to: receive data relating to additive manufacturing of a test coupon; based on the received data, identify one or more manufacturing anomalies in the test coupon; based on non-destructive testing, identify one or more manufacturing defects within the test coupon; and perform registration between the one or more manufacturing anomalies and the one or more manufacturing defects with a machine learning model to generate a predictive model, the predictive model being configured to identify future manufacturing anomalies that would result in future manufacturing defects.

B1. The data processing system of paragraph B0, wherein the additive manufacturing process comprises laser bed powder fusion.

B1.1 The data processing system of paragraph B0 or B1, wherein the additive manufacturing process comprises direct energy deposition.

B2. The data processing system of paragraph B1 or B1.1, wherein the data relating to the additive manufacturing of the test coupon includes melt pool data.

B3. The data processing system of paragraph B2, wherein the melt pool data includes a size of the melt pool.

B4. The data processing system of paragraph B2 and/or B3, wherein the data relating to the additive manufacturing of the test coupon further includes a power output of a laser utilized in the laser bed powder fusion.

B5. The data processing system of any of paragraphs B2-B4, wherein the one or more manufacturing anomalies comprise spatter anomalies.

B6. The data processing system of any of paragraphs B0-B5, wherein the non-destructive testing comprises computed tomography (CT).

B6.1 The data processing system of B6, wherein the CT utilizes x-ray image data.

B7. The data processing system of any of paragraphs B0-B6.1, wherein the machine learning model comprises a classification model.

B8. The data processing system of any paragraphs B0-B7, wherein the received data includes image data; and wherein the plurality of instructions are further executable by the one or more processors to utilize a computer vision algorithm to identify the one or more manufacturing defects.

B8.1. The data processing system of paragraph B8, wherein the computer vision algorithm comprises an edge detection algorithm.

B9. The data processing system of any of paragraphs B0-B8.1, wherein the received data includes optical tomography data.

B10. The data processing system of any of paragraphs B0-B19, wherein the plurality of instructions are further executable by the one or more processors to identify one or more fractures resulting from stress testing of the test coupon to identify the one or more manufacturing defects.

B11. The data processing system of any of paragraphs B0-B10, wherein the plurality of instructions are further executable by the one or more processors to: monitor in-process additive manufacturing of a component with optical tomography to acquire optical tomography data; and analyze the optical tomography data with the predictive model.

B11.1. The data processing system of paragraph B11, wherein the plurality of instructions are further executable by the one or more processors to: alter one or more process parameters of the in-process additive manufacturing; and/or cease the in-process additive manufacturing; and/or designate the component to be scrapped.

C0. A computer implemented method of in-process monitoring of an additive manufacturing process, the method comprising: monitoring an additive manufacturing process with optical tomography; and utilizing a predictive model to analyze optical tomography data, the predictive model configured to identify one or more manufacturing anomalies which would result in one or more manufacturing defects within a resulting component of the additive manufacturing process; wherein the predictive model was generated according to the method of any of paragraphs A0 to A12.1.

C0.1. A computer implemented method of in-process monitoring of an additive manufacturing process, the method comprising: monitoring an additive manufacturing process with optical tomography; and utilizing a predictive model to analyze optical tomography data, the predictive model configured to identify one or more manufacturing anomalies which would result in one or more manufacturing defects within a resulting component of the additive manufacturing process; wherein the predictive model was trained with the following steps: historical optical tomography data was received relating to additive manufacturing of a test coupon; one or more historical manufacturing anomalies in the test coupon were identified in the historical optical tomography data; one or more manufacturing defects within the test coupon were identified; and registration between the one or more manufacturing anomalies and the one or more manufacturing defects was performed resulting in the predictive model.

C1. The computer implemented method of paragraph C0 or C0.1, wherein the one or more historical manufacturing defects within the test coupon were identified with computed tomography (CT).

C2. The computer implemented method of paragraph C0 or C1, wherein the CT utilized x-ray image data.

C3. The computer implemented method any of paragraphs C0-C2, wherein the additive manufacturing process comprises laser bed powder fusion.

C3.1 The computer implemented method of any of paragraphs C0-C3, wherein the additive manufacturing process comprises direct energy deposition.

C3.2. The computer implemented method of paragraph C3 or C3.1, the method further comprising: monitoring a melt pool of the additive manufacturing process to acquire melt pool data; and utilizing the predictive model and the melt pool data to alter one or more process parameters of the additive manufacturing process.

C3.2.1 .The computer implemented method of paragraph C3.2, wherein the melt pool data includes a size of the melt pool.

C3.3. The computer implemented method of any of paragraphs C3-C3.2.1, the method further comprising: monitoring a power output of a laser utilized in the additive manufacturing process to acquire laser power data; and utilizing the predictive model and the laser power data to alter one or more process parameters.

C3.4 The computer implemented method of any of paragraphs C3.2-C3.3, wherein the one or more process parameters include at least one of a melt pool size, a melt pool temperature, and/or a laser power output.

C3.5. The computer implemented method of any of paragraphs C3-C3.4, wherein the one or more manufacturing anomalies and/or the one or more historical manufacturing anomalies comprise spatter anomalies.

C4. The computer implemented method of any of paragraphs C0-C3.5, wherein the predictive model comprises a classification model.

C5. The computer implemented method of any of paragraphs C0-C4, wherein the one or more historical manufacturing anomalies in the test coupon were identified in the historical optical tomography data utilizing a computer vision algorithm.

C5.1. The computer implemented method of paragraph C5, wherein the computer vision algorithm comprises an edge detection algorithm.

C6. The computer implemented method of any of paragraphs C0-C5.1, wherein the identifying the one or more manufacturing defects within the test coupon includes identifying one or more fractures resulting from stress testing of the test coupon.

C7. A computer program comprising computer program instructions that, when executed by one or more computer processors, cause the one or more computer processors to perform the method of any of paragraphs C0 to C6.

C8. A computer readable medium having stored therein a computer program in accordance with paragraph C7.

C9. A data processing system (500) for in-process monitoring of an additive manufacturing process (102) comprising: one or more computer processors (504); a computer memory (506); and the computer program of paragraph C7 stored in the memory (506).

C10. An additive manufacturing device (200) comprising the data processing system (500) of paragraph C9.

C11. An additive manufacturing device configured to monitor the manufacturing of the resulting component with the computer implemented method of any of paragraphs C0-C6.

### Advantages, Features, and Benefits

The different examples of the methods and systems for in-process monitoring of additive manufacturing described herein provide several advantages over known solutions for monitoring additive manufacturing processes. For instance, illustrative examples described herein allow for real-time detection and correction of manufacturing anomalies, which can reduce the incidence of defects in the final product.

Additionally, and among other benefits, illustrative examples described herein allow a reduction in material waste and associated costs by enabling proactive adjustments to the manufacturing process, rather than relying on post-process testing.

Additionally, and among other benefits, illustrative examples described herein allow for the fine-tuning of process parameters such as laser power output, melt pool size, and scan speed, thereby increasing the quality of the manufactured components.

Additionally, and among other benefits, illustrative examples described herein allow for improved quality control, reduced waste, and increased overall efficiency in the manufacturing process.

No known system or device can perform these functions. However, not all examples described herein provide the same advantages or the same degree of advantage.

### Conclusion

The disclosure set forth above may encompass multiple distinct examples with independent utility. Although each of these has been disclosed in its preferred form(s), the specific examples thereof as disclosed and illustrated herein are not to be considered in a limiting sense, because numerous variations are possible. To the extent that section headings are used within this disclosure, such headings are for organizational purposes only. The subject matter of the disclosure includes all novel and nonobvious combinations and subcombinations of the various elements, features, functions, and/or properties disclosed herein. The following claims particularly point out certain combinations and subcombinations regarded as novel and nonobvious. Other combinations and subcombinations of features, functions, elements, and/or properties may be claimed in applications claiming priority from this or a related application.

## Claims

1. A computer implemented method (300) comprising:
receiving (302) data relating to additive manufacturing of a test coupon (104);
based on the received data, identifying (304) one or more manufacturing anomalies in the test coupon (104);
based on non-destructive testing, identifying (306) one or more manufacturing defects within the test coupon (104); and
performing registration (308) between the one or more manufacturing anomalies and the one or more manufacturing defects with a machine learning model to generate a predictive model (116), the predictive model (116) being configured to identify future manufacturing anomalies that would result in future manufacturing defects.

2. The computer implemented method (300) of claim 1, wherein the additive manufacturing process (102) comprises laser bed powder fusion.

3. The computer implemented method (300) of claim 1 or 2, wherein the one or more manufacturing anomalies comprise spatter anomalies.

4. The computer implemented method (300) of any of claims 1 to 3, wherein the non-destructive testing comprises computed tomography (112) that, optionally, utilizes x-ray image data.

5. The computer implemented method (300) of any of claims 1 to 4, wherein:
the received data includes image data;
identifying (304) one or more manufacturing anomalies in the test coupon (104) includes utilizing a computer vision algorithm to identify the one or more manufacturing anomalies in the image data; and, optionally,
the computer vision algorithm comprises an edge detection algorithm.

6. A computer implemented method (300) of in-process monitoring of an additive manufacturing process (102), the method (300) comprising:
monitoring (310) an additive manufacturing process (102) with optical tomography to result in optical tomography data; and
utilizing a predictive model (116) to analyze the optical tomography data, the predictive model (116) configured to identify one or more manufacturing anomalies which would result in one or more manufacturing defects within a resulting component of the additive manufacturing process (102);
wherein the predictive model (116) was generated in accordance with the method of any of claims 1 to 5.

7. The computer implemented method (300) of claim 6, the method (300) further comprising:
monitoring a power output of a laser utilized in the additive manufacturing process (102) to acquire laser power data; and
utilizing the predictive model (116) and the laser power data to alter one or more process parameters.

8. The computer implemented method (300) of claim 7, wherein the one or more process parameters include at least one of a melt pool size, a melt pool temperature, and/or a laser power output.

9. The computer implemented method (300) of any of claims 6 to 8, wherein the one or more historical manufacturing anomalies in the test coupon (104) were identified in the historical optical tomography data utilizing a computer vision algorithm.

10. The computer implemented method (300) of any of claims 6 to 9, wherein the identifying (306) the one or more manufacturing defects within the test coupon (104) includes identifying one or more fractures resulting from stress testing of the test coupon (104).

11. The computer implemented method (300) of any of claims 6 to 10, further comprising any of and any combination of:
altering one or more process parameters of the in-process additive manufacturing;
ceasing the in-process additive manufacturing; and
designating the component to be scrapped.

12. A computer program comprising computer program instructions that, when executed by one or more computer processors, cause the one or more computer processors to perform the method of any of claims 1 to 11.

13. A computer readable medium having stored therein a computer program in accordance with claim 12.

14. A data processing system (500) for in-process monitoring of an additive manufacturing process (102) comprising:
one or more computer processors (504);
a computer memory (506); and
the computer program of claim 12 stored in the memory (506).

15. An additive manufacturing device (200) comprising the data processing system (500) of claim 14.
